Europäisches Patentamt

European Patent Office

Office européen des brevets

(11) Numéro de publication: **0 469 213 A1**

## DEMANDE DE BREVET EUROPEEN

(21) Numéro de dépôt: **90402218.3**

(51) Int. Cl.5: **G06F 9/44**, G06F 11/00

(22) Date de dépôt: **02.08.90**

(43) Date de publication de la demande:
**05.02.92 Bulletin 92/06**

(84) Etats contractants désignés:
**AT BE CH DE DK ES FR GB GR IT LI LU NL SE**

(71) Demandeur: **Société anonyme dite: LABINAL**
**5, Avenue Newton**
**F-78190 Montigny le Bretonneux(FR)**

(72) Inventeur: **Renault, Guy**
**86 avenue Galliéni**
**Roussillon 16, F-93800 Epinay/Seine(FR)**

(74) Mandataire: **Bernasconi, Jean et al**
**CABINET LEMOINE ET BERNASCONI 13,**
**Boulevard des Batignolles**
**F-75008 Paris(FR)**

(54) **Procédé d'automatisation de certaines interventions humaines de validation de modules dans les systèmes de développement de logiciels.**

(57) Le procédé d'automatisation de certaines interventions humaines de validation de modules dans les systèmes de développement de logiciels, est caractérisé en ce que, si le module n'a pas encore été validé dans le logiciel en cours de développement, et/ou si le module a déjà été validé mais passe avec succès des tests de correction, l'on remplace la validation manuelle d'un module d'un logiciel par le responsable du projet par une validation automatique par un processus utilitaire.

Rank Xerox (UK) Business Services

Cette invention concerne une amélioration qui peut être apportée aux systèmes de développement de logiciels.

Ces systèmes utilisent une machine de développement sur laquelle fonctionne un programme d'aide au développement de logiciel, encore appelé "atelier logiciel" ou "atelier de génie logiciel".

La machine est en général, mais non nécessairement, une machine d'un type incompatible, du point de vue du jeu d'instructions qu'elle accepte, avec la machine sur laquelle fonctionneront les programmes développés à l'aide de l'atelier logiciel. Dans ce cas, on parle de "développement croisé", pour une machine, dite "cible", différente de la machine de développement.

Typiquement, mais de façon non obligatoire, le développement d'un logiciel se décompose en une succession d'étapes d'analyse de plus en plus fine des fonctions à réaliser, jusqu'à obtention de fonctions réalisables dans le langage de programmation utilisé, suivie ensuite d'une succession d'étapes d'intégration et de validation des fonctions réalisées jusqu'à obtention du logiciel définitif. A chaque niveau d'analyse correspond normalement un niveau d'intégration et de validation des fonctions apparaissant à ce niveau, ce qui se traduit par l'élaboration de documents d'analyse et de validation des fonctions élaborées.

En général, une ou plusieurs étapes des niveaux supérieurs ne comportent pas de développement informatique à proprement parler: à ces niveaux, le travail effectué se limite souvent à la production de documents que l'on désigne habituellement comme les spécifications, le cahier des charges ou l'analyse fonctionnelle du logiciel. Le fait que ces étapes ne comportent pas à proprement parler de développement informatique n' implique pas nécessairement que l'informatique en soit totalement absente: on peut, par exemple, tirer avantage dans ces étapes de logiciels d'aide à la conception, à la vérification de spécifications ou à la gestion de projets, ainsi que de logiciels de traitement de texte pour l'élaboration des documents.

Aux niveaux inférieurs, a lieu l'écriture des modules proprement dits, le niveau le plus bas n'utilisant que les primitives du langage informatique utilisé ou des fonctions de biliothèques externes utilisées en "boites noires" et donc considérées comme exemptes d'erreur. A ces niveaux, on peut, en général, tester la correction d'un module au moyen de tests - dits "unitaires" - simples, dont la fonction est de s'assurer que le module concerné remplit correctement la fonction qui lui a été impartie, au moins sur des jeux de données élémentaires. Toutefois, ce genre de précautions n'est pas superfétatoire, l'expérience prouvant qu'une erreur de programmation à ce niveau est parfois très difficile à détecter.

Un atelier logiciel a pour objet d'assurer une qualité maximale au logiciel obtenu, la qualité s'exprimant, de façon non limitative, par l'absence d'erreur de conception ou de programmation, par le respect des délais annoncés pour le développement, par la facilité de modification, de réutilisation, d'évolution et/ou de portage sur une autre machine, par la production de documents à jour concernant les diverses phases du projet de développement, et en particulier, de la documentation finale d'utilisation du logiciel.

Afin d'atteindre ces objectifs, un atelier logiciel se devra, entre autres, d'imposer au programmeur le respect d'un certain nombre de règles dans le développement d'un logiciel informatique. En particulier, la plupart des systèmes de développement de logiciel prévoieront, en même temps que l'écriture des spécifications, des jeux de cas de test que devront passer avec succès les modules développés pour être validés. Aux niveaux inférieurs, les résultats pourront même être, dans certains cas, prévus explicitement, ce qui permettra au programmeur une vérification aisée de la correction d'un module. Dans les autres cas, le programmeur ou le responsable du développement du logiciel devra s'assurer, par des moyens adéquats, que les résultats sont conformes aux spécifications avant de valider ou de faire valider un module nouvellement écrit.

De même, pour des raisons de sécurité dans le développement du logiciel, il est très souhaitable qu'il ne soit pas possible de revenir en arrière dans l'avancement du développement d'un projet logiciel, par le biais de la réintroduction d'erreurs lors de la modification de parties du logiciel déjà au point, et que les programmeurs puissent accéder en toute certitude à une version du logiciel le représentant de façon fiable à son état d'avancement du moment.

Pour cette raison entre autres, il est généralement utilisé une procédure de validation, ou certification, qui ne pourra être mise en oeuvre que par le responsable du développement du logiciel. Le fait de valider par cette procédure un module du logiciel aura pour conséquence d'interdire toute modification ultérieure du module ainsi validé, même par son auteur, garantissant ainsi, dans la mesure du possible, une version stable logiciel en cours de développpment.

Cette validation ou cette certification consiste typiquement soit à protéger contre la modification ou la destruction, les modules validés "in situ" dans la zone de développement lorsque cette dernière est commune à tous les programmeurs, soit à transférer ou à dupliquer ces modules dans une zone protégée contre la modification ou la destruction lorsque chaque programmeur possède sa propre zone de développement, soit encore, à tenir à jour une liste des modules validés et à interdire la modification ou la destruction de module figurant dans cette liste. Celà requiert évidemment qu'une personne ayant les habilitations nécessaires, en général le responsable du projet de développement, effectue la validation à la demande des programmeurs, et en leur lieu et place, assurant ainsi par ailleurs un contrôle de premier niveau.

Dans un système informatique multi-utilisateur, chaque fichier est en général la propriété d'un utilisateur donné, ce qui se traduit par la présence du code d'identification de l'utilisateur dans une zone appropriée de l'entête de description du fichier. Par ailleurs, le fichier est muni de protections, qui, en général, sont de l'une des trois sortes suivantes: soit le fichier est protégé par un ou plusieurs mots de passe correspondant au diverses opérations qu'il est possible d'effectuer sur le fichier, soit le fichier comporte, dans une zone appropriée de son entête de description, une liste des personnes habilitées à accéder au fichier avec les opérations autorisées, soit encore, le fichier possède, pour quelques grandes catégories d'utilisateurs, une liste d'habilitations pour les opérations de base sur un fichier: lecture, écriture, modification, suppression, listage, etc.

Les systèmes multi-utilisateurs possèdent souvent, parmi les grandes catégories ci-dessus évoquées, la notion de groupe de personnes, qui est destinée à faciliter l'accès de diverses personnes d'un même groupe aux fichiers appartenant à l'une d'entre elles, dans l'optique d'un travail organisé autour de données communes (entreprise, projet, etc.). Dans ce cas, les identifieurs des personnes sont associés, soit explicitement, soit implicitement, à des identifieurs de groupes, qui indiquent l'appartenance des personnes aux groupes ainsi associés, et leur permettent d'accéder aux fichiers qui sont la propriété de l'une des personnes du groupe par le biais des habilitations du groupe contenues dans l'entête de description des fichiers.

L'identification d'un utilisateur du système informatique est établie, au début d'une session d'utilisation de la machine, par le système d'exploitation, qui demande au candidat utilisateur son pseudonyme de connexion, et le mot de passe correspondant, non affiché, pour certifier l'identification. La liste des pseudonymes des utilisateurs habilités à utiliser le système informatique est contenue dans un fichier du système d'exploitation, qui, outre les pseudonymes des utilisateurs, contient également l'identificateur associé de l'utilisateur, ainsi que celui de son groupe, dans le cas où ce dernier ne se déduit pas de l'identifieur de l'utilisateur (cas des systèmes UNIX (tm)). Bien évidemment, une même personne physique peut être connue du système d'exploitation sous divers pseudonymes, en fonction des tâches ou des projets sur lesquels elle travaille.

Les identifieurs sont en général composés d'un ou de deux entiers, suivant que le groupe est considéré comme partie intégrante de l'identifieur d'une personne (cas du système d'exploitation VMS (tm) de DEC, où l'identifieur du groupe est la moitié de poids fort de l'identifieur d'une personne), ou que le groupe est considéré comme une entité distincte (cas des systèmes d'exploitation de la famille UNIX (tm)).

Lorsque la procédure de validation évoquée plus haut utilise la méthode de protection "in situ" dans la zone de développement, celle-ci consiste typiquement à changer de propriétaire le module à valider, et à configurer les habilitations d'accès au fichier de façon à interdire toute forme de modification ou de suppression du fichier. Lorsque la méthode de protection consiste à transférer ou à recopier le module à valider dans une autre zone que celle où il a été developpé, la protection peut être faite, de même que précédemment, en changeant le propriétaire du fichier, mais pourra être réalisée de façon plus simple en protégeant globalement la zone de validation contre tout accès visant à modifier ou à supprimer un module, ce qui présente par ailleurs l'intérêt d'empêcher, dans cette zone, le stockage - volontaire ou non - de fichiers étrangers au logiciel en cours de développement.

En résumé, une fois un module de logiciel validé suivant la procédure indiquée plus haut, il n'est plus accessible qu'en lecture seule par les programmeurs (pour consultation ou utilisation dans les autres modules en cours de développement), et il est à l'abri contre toute tentative ultérieure de modification, volontaire ou non, de la part de l'un des programmeurs (auteur du module compris), et seul le responsable du projet sera habilité à effectuer à nouveau l'opération de validation ci-dessus décrite, si le module venait à devoir être modifié par la suite.

Toutefois, cette procédure est inutilement contraignante dans le cas où le module en question n'a jamais été validé, au sens défini ci-dessus, ou si déjà validé, la correction du module peut être vérifiée de façon automatique - ou semi-automatique - par le système de développement de logiciel.

En effet, une intervention du responsable du projet reste malgré tout requise pour effectuer cette validation d'un nouveau module, alors même que tout risque d'introduction d'erreur ou de modification inconsidérée d'un module déjà validé, puisque, par hypothèse, soit le module en question n'est pas encore validé, soit il est possible de déterminer automatiquement (ou semi-automatiquement) la correction du module à valider. Celà a pour inconvénient, outre une perte de temps inutile pour le responsable du projet, de pouvoir retarder inutilement l'avancement du projet, dans le cas où le responsable est absent ou indisponible en raison d'autres tâches.

De façon typique mais non exclusive, le cas où le système de développement de logiciel peut déterminer automatiquement la validité d'un module est celui où il existe pour ce module un nombre suffisant de cas de test pour lesquels le résultat exact est connu (par exemple, tests "unitaires" pour les modules de bas niveaux), permettant ainsi au système de développement de logiciel de s'assurer de la correction du module en exécutant ce dernier sur les données des cas de test, et en comparant les résultats fournis par le module avec les résulats prévus. Il peut arriver que les résultats prévus initialement n'aient pas été corrects, ou qu'il soit possible sans inconvénient d'obtenir des résultats légèrement différents de ceux prévus: il faudra alors, en général, modifier la procédure de test pour qu'elle accepte ces résultats, ce qui ne pourra être fait que par le responsable du projet de développement du logiciel.

Dans les cas où le système de développement de logiciel ne peut déterminer automatiquement la correction d'un module, la validation devra normalement être effectuée de façon manuelle par le responsable du développement du logiciel. Toutefois, dans certains cas particuliers où la correction d'un module pourra être rendue évidente pour le programmeur, mais où une procédure entièrement automatique serait difficilement envisageable, le responsable du développement du logiciel pourra, par le canal du système de développement de logiciel, déléguer au programmeur, dans ces cas précis, l'habilitation à valider un module de façon semi-automatique, c'est-à-dire, si et seulement si, un certains nombre de tests et de procédures ont donné, "à l'évidence" pour le programmeur, un résultat correct.

L'invention consiste, dans les cas évoqués ci-dessus, c'est-à-dire, lorsque, soit un module n'aura pas été déjà validé, soit qu'il aura déjà été validé, mais qu'il sera possible au système de développement de logiciel de s'assurer automatiquement - ou semi-automatiquement, ainsi que défini ci-dessus - de la correction du module, à prévoir un processus automatique, ayant les habilitations requises, pour effectuer automatiquement la validation demandée, en lieu et place du responsable du projet.

L'invention est donc principalement caractérisée par un processus de validation, au sens défini plus haut, de modules de logiciel, associé à un mécanisme de délégation temporaire et limitée de privilèges permettant à un programmeur sans habilitation particulière, d'effectuer cette validation automatiquement pour les modules non encore validés du logiciel, ainsi que pour un module déjà validé, à condition que le module passe avec succès, ainsi qu indiqué plus haut, un certain nombre de tests le concernant.

Plus précisément, un programmeur ayant mis au point un module, pourra effectuer automatiquement la validation en activant un processus utilitaire qui, ayant les habilitations adéquates, vérifiera alors, soit la non validation, au sens décrit plus haut, du module demandé, soit, si le module a déjà été validé, effectuera sur le module proposé les tests le concernant, éventuellement en collaboration avec le programmeur, et n'effectuera la validation qu'à la condition que les tests aient tous été passés avec succès par le module.

L'activation du processus de validation se fera, à la demande du programmeur, par le système de développement de logiciel par tout mécanisme approprié offert par le système d'exploitation ou la machine de développement utilisé(e).

L'invention ci-dessus peut être implémentée sur divers systèmes informatiques. Dans une réalisation préférentielle, la machine de développement est une machine VAX (tm) de la société Digital Equipment Corporation (DEC) ou une machine compatible, utilisant le système d'exploitation VMS (Virtual Memory System). Toutefois, il serait possible de réaliser cette invention avec un autre système d'exploitation, par exemple, ULTRIX (tm) de DEC sur VAX (tm), ou un autre système d'exploitation de la famille UNIX (tm) d'AT&T ou d'une autre origine.

Dans cette réalisation préférentielle sous VMS(tm), le processus de validation est une procédure écrite en langage de commande ("Digital Command Language", en abrégé, "DCL"). Cette procédure est lancée par l'intermédiaire d'une queue de traitement par lot ("batch queue") une fois pour toute à la création du projet de développement logiciel. Grâce à un paramétrage adéquat, la procédure ci-dessus est automatiquement démarrée à nouveau lors des arrêts du système informatique. Il serait parfaitement possible d'utiliser une autre méthode pour activer cette procédure de validation, comme de la lancer automatiquement à chaque redémarrage par le biais de la procédure d'initialisation du système.

Une fois lancée ainsi qu'indiqué au paragraphe précédent, la procédure répète indéfiniment les étapes suivantes:

- la procédure attend une demande de validation d'un module de la part d'un programmeur, via un utilitaire du système de développement logiciel;
- lorsqu'une telle demande est reçue au moyen d'un mécanisme approprié qui sera décrit plus loin, la procédure recherche dans toute la zone de développement une procédure temporaire, d'un nom convenu à l'avance, qui contient les opérations à exécuter pour la validation du module. Cette procédure temporaire, écrite au préalable par le système de développement de logiciel, contient obligatoirement: soit la vérification de non validation du module de logiciel concerné par la demande de validation du programmeur, ce qui assure que les règles de validation sont bien respectées (module non encore validé), soit, si le module a déjà été validé, la vérification du succès des tests de correction appliqués au module; cette procédure temporaire est également une procédure "DCL";

- une fois exécutées les instructions de validation contenues dans la procédure temporaire décrite ci-dessus, la procédure de validation détruit la procédure temporaire, de façon à ce qu'elle ne puisse pas être réexécutée ultérieurement par inadvertance;

- ainsi qu'indiqué plus haut, les étapes ci-dessus sont répétées de façon permanente, de telle sorte qu'un programmeur peut à tout moment valider un module du logiciel en cours de développement, sans l'intervention du responsable de ce développement.

Dans la réalisation préférentielle, les conventions suivantes, bien que non obligatoires, ont été adoptées: tous les programmeurs et les personnes ayant informatiquement accès au projet de développement d'un même logiciel sont identifiés à l'intérieur du système d'exploitation comme appartenant à un même groupe, représentant par convention le projet de développement du logiciel.

Sur le système d'exploitation VAX/VMS (tm) utilisé pour la réalisation préférentielle, l'identifieur de groupe d'une personne est la moitié de poids fort de l'identifieur (entier sur 32 bits) de cette personne, ce qui signifie que ce système d'exploitation est de ceux où le groupe fait partie intégrante de l'identifieur des personnes. Toutes les personnes faisant partie du projet de développement auront donc en commun cette moitié supérieure de leur identifieur, et par convention, le projet, et lui seul, aura une partie basse nulle. Enfin, les modules validés du logiciel en développement seront, par convention également, la propriété du projet, et non plus du (ou des) programmeur(s) les ayant développés.

En utilisant les conventions ci-dessus, la procédure temporaire de validation évoquée plus haut effectuera alors la validation de la façon suivante, ou de toute autre adéquate:

- la procédure change le propriétaire du module à valider, en annulant la partie basse (16 bits), qui identifie le programmeur ayant écrit le module ) à l'intérieur du groupe de développement, tout en conservant inchangée la partie haute qui désigne le groupe, ce qui donne par convention l'identifieur du projet (aucun programmeur n'a zéro comme partie basse de son identifieur);

- la procédure protège alors le module à valider contre l'écriture et la destruction (seule la lecture reste autorisée) par le positionnement adéquat de l'habilitation de groupe du module;

A la sortie de cette procédure temporaire, le module validé ne sera plus accessible qu'en lecture seulement à toutes les personnes du groupe, y compris le programmeur ayant développé le module, puisqu'une fois validé, ce module ne lui appartiendra plus.

Par ailleurs, dans le système d'exploitation VAX/VMS (tm) utilisé dans la réalisation préférentielle de l'invention, il existe diverses méthodes pouvant servir à la communication d'informations entre deux tâches.

De façon non nécessairement exhaustive, ces méthodes sont les suivantes:

- par sémaphore commun ("common event flag"): le système d'exploitation VMS (tm) offre des services de sémaphores communs; ces derniers sont au nombre de 64, 32 locaux au processus, les 32 autres pouvant être partagés par des processus appartenant à un même groupe, c'est-à-dire, à des processus en exécution dont les propriétaires font partie du même groupe, c'est-à-dire, ont des identifieurs (entier sur 32 bits) dont la partie haute (16 bits) est la même; les primitives du système d'exploitation correspondant à ces sémaphores communs sont l'association (avec création éventuelle), la déassociation (avec suppression éventuelle), la mise à zéro, la mise à un, et surtout, l'attente sur un sémaphore tant que ce dernier est nul;

- par nom logique ("logical name"):
les noms logiques sont des chaines de caractères pour lesquelles le système maintient une chaine de caractères équivalente; ces nom logiques sont typiquement utilisés pour repérer des fichiers de données, ce qui permet de changer le nom (et donc la localisation du fichier) sans avoir à modifier les processus qui l'emploient; ces noms logiques sont stockées dans des tables logiques auxquelles les processus ayant les habilitations adéquates peuvent accéder; typiquement, les processus appartenant à un même groupe d'utilisateurs peuvent accéder à une table commune au groupe pour échanger des informations par ce canal;

- par boite-à-lettres ("mailbox"):
les boites-à-lettres sont des zones de mémoire du système dans lesquelles des processus, ayant les habilitations adéquates, peuvent écrire, tandis que d'autres processus peuvent lire les informations écrites par les premiers; de même que précédemment, ce boites-à-lettres seront généralement communes à un groupe d'utilisateurs;

- par section partagée ("global section"):
les sections partagées sont des blocs de données stockées, soit en mémoire centrale de la machine, soit sur disque dans le fichier de la mémoire virtuelle; par le jeu des routines correspondantes du système, il est possible que ces zones de mémoires apparaissent comme communes à un ou plusieurs processus ayant les habilitations adéquates, ce qui leur permet d'échanger des informations en écrivant ou en lisant ces sections partagées;

- par interblocage ("lock"):

les interblocages sont utilisés pour sérier les accès à une même zone de données, généralement sur disque; les primitives du système permettent de mettre en queue des demandes d'accès à la zone de données, de façon à ce que le processus dont la demande est servie ait l'accès exclusif à la zone de données; cette technique permet aussi à un processus de connaitre l'existence de processus concurrents, par le fait qu il se voit refuser l'accès à la zone de données lorsqu'un autre processus y a accès; ainsi, le fait d'accéder à une zone de données en sérialisant les accès au moyen d'un interblocage permet en soi la communication d'une information d'un processus à un autre, qui peut être interprétée par ce dernier d'une manière convenue à l'avance, comme, par exemple, d'avoir à effectuer un travail comme la validation d'un module de logiciel;

- par fichier ("file"):

un fichier est une zone de données sur disque; pour communiquer des informations d'un processus à un autre, il suffit de convenir du nom d'un fichier dans lequel le premier processus écrira l'information voulue, qui sera ensuite relue, par le second; lorsque l'information est de nature binaire, l'information peut aussi être transmise par la seule existence/absence du fichier de transfert, ce qui est utilisé classiquement par d'autres systèmes d'exploitation comme certains de la famille UNIX System V (tm) d'origine AT&T, pour se réserver un port d'entrée/sotie.

Dans la réalisation préférentielle, c'est la méthode par sémaphore qui a été utilisée; c'est en effet la plus adaptée au problème à résoudre. Toutefois, toutes les autres méthodes peuvent également être utilisées sans difficulté majeure. Ainsi, par exemple, la procédure de validation peut tester à intervalles de temps réguliers une mémoire partagée afin de vérifier si elle ne contient pas une information indiquant une demande de validation de la part d'un programmeur. Cette méthode présente l'avantage de pouvoir passer des informations complémentaires telles que par exemple, le nom de la procédure temporaire à exécuter, et également, de pouvoir être réalisée indifféremmment par le biais d'un nom logique, d'une boîte-à-lettres, d'une section partagée ou par un fichier. Toutefois, cette méthode présente l'inconvénient de nécessiter du temps machine du fait de la scrutation régulière de la mémoire partagée, ce qui n'est pas le cas avec la technique des sémaphores communs.

A titre d'illustration, on trouvera ci-dessous la liste des instructions des divers processus concourant à la réalisation préférentielle de l'invention.

La demande de validation d'un module est émise à l'aide du processus suivant, écrit en FORTRAN:

```
Processus "SENDVAL"


    !

    !    Activation du process detache du projet pour la validation

    !

         INTEGER          STATUS
         INCLUDE '($IODEF)'
         INCLUDE '($SSDEF)'

    !
```

```
!      Routines systeme
!

        INTEGER          SYS$ASCEFC,SYS$SETEF,SYS$WAITFR
!

        STATUS = SYS$ASCEFC (%VAL(116),'SYGAL',,)
        IF (.NOT. STATUS) CALL LIB$SIGNAL (%VAL(STATUS))
        STATUS = SYS$ASCEFC (%VAL(117),'SYGAL',,)
        IF (.NOT. STATUS) CALL LIB$SIGNAL (%VAL(STATUS))
        STATUS = SYS$ASCEFC (%VAL(118),'SYGAL',,)
        IF (.NOT. STATUS) CALL LIB$SIGNAL (%VAL(STATUS))
!

!      Demande de validation
!

        STATUS = SYS$SETEF (%VAL(116))
        IF (.NOT. STATUS) CALL LIB$SIGNAL (%VAL(STATUS))
!

!      Attente prise en compte de la demande
!

        STATUS = SYS$WAITFR (%VAL(117))
        IF (.NOT. STATUS) CALL LIB$SIGNAL (%VAL(STATUS))
!

!      Attente fin de traitement de validation
!

        STATUS = SYS$WAITFR (%VAL(118))
        IF (.NOT. STATUS) CALL LIB$SIGNAL (%VAL(STATUS))
        END
```

La procédure de validation, qui est en attente sur le sémaphore commun et qui est activée par le processus précédent, est, dans la réalisation préférentielle, écrite de la façon suivante (langage de commande "DCL"):

<u>Procédure de validation</u>

```
        $        GOTO I_DEBUT
        $!
```

```
$! +-----------------------------------------------------+
$! !           ATELIER DE GENIE LOGICIEL : SYGAL          !
$! !                                                      !
$! !    SYsteme de Generation Automatique de Logiciels    !
$! !                                                      !
$! !    Traitement des commandes privilegiees du groupe   !
$! +-----------------------------------------------------+
$!
$I_DEBUT:
$        SET CONTROL_Y
$        SET PROC/PRIV=GRPPRV
$        SET MESSAGE/NOIDEN/NOSEV/NOFAC
$        SET TERM/ECHO
$I_BOUCLE:
$        RUN 'M_SYGAL_DEV'[SYGAL]WAITVAL
$I_BOUCLE1:
$        M_FIC_SYGAL == F$SEARCH("[''M_PROJECT'...]SYGAL.SYGAL")
$        IF M_FIC_SYGAL .NES. "" THEN GOTO I_BOUCLE2
$        RUN 'M_SYGAL_DEV'[SYGAL]ANSWVAL
$        GOTO I_BOUCLE
$I_BOUCLE2:
$!       WRITE SYS$OUTPUT "Traitement ''M_FIC_SYGAL'"
$        ON ERROR THEN GOTO I_BOUCLE3
$        ON SEVERE_ERROR THEN GOTO I_BOUCLE3
$        @'M_FIC_SYGAL'
$I_BOUCLE3:
$        SET PROT=(O:RWED,G:RWED) 'M_FIC_SYGAL'
$        DELETE/NOCONF 'M_FIC_SYGAL'
$!       WRITE SYS$OUTPUT "Fin du traitement"
$!       WRITE SYS$OUTPUT ""
$        GOTO I_BOUCLE1
$!
$        EXIT
```

Les processus "WAITVAL" et "ANSWVAL" apparaissant ci-dessus sont écrits en langage FORTRAN ainsi que suit:

Processus "WAITVAL"

```
      !
      !    Attente d'un evenement de validation d'un constituant
      !
              INTEGER          STATUS
              INCLUDE  '($IODEF)'
              INCLUDE  '($SSDEF)'
      !
      !    Routines systeme
      !
              INTEGER          SYS$WAITFR,SYS$CLREF
              INTEGER          SYS$ASCEFC,SYS$SETEF
      !
              STATUS = SYS$ASCEFC (%VAL(116),'SYGAL',,)
              IF (.NOT. STATUS) CALL LIB$SIGNAL (%VAL(STATUS))
              STATUS = SYS$ASCEFC (%VAL(117),'SYGAL',,)
              IF (.NOT. STATUS) CALL LIB$SIGNAL (%VAL(STATUS))
      !
      !    Attente demande de validation
      !
              STATUS = SYS$WAITFR (%VAL(116))
              IF (.NOT. STATUS) CALL LIB$SIGNAL (%VAL(STATUS))
      !
      !    Acquittement de la demande
      !
              STATUS = SYS$SETEF (%VAL(117))
              IF (.NOT. STATUS) CALL LIB$SIGNAL (%VAL(STATUS))
              END
```

Processus "ANSWVAL"

```
      !
      !    Indication de fin de validation d'un constituant
      !
```

```
        INTEGER          STATUS
        INCLUDE '($IODEF)'
        INCLUDE '($SSDEF)'
    !
    ! Routines systeme
    !
        INTEGER          SYS$ASCEFC,SYS$SETEF
    !
        STATUS = SYS$ASCEFC (%VAL(118),'SYGAL',,)
        IF (.NOT. STATUS) CALL LIB$SIGNAL (%VAL(STATUS))
        STATUS = SYS$SETEF (%VAL(118))
        IF (.NOT. STATUS) CALL LIB$SIGNAL (%VAL(STATUS))
        END
```

Ainsi que mentionné plus haut, l'invention peut également être réalisée sur d'autres systèmes d'exploitation, comme les systèmes d'exploitation de la famille UNIX (tm) en provenance d'AT&T ou d'autre origine. Dans cette famille de systèmes, il existe plusieurs méthodes pour permettre à deux processus de coopérer.

De façon non limitative, ces méthodes sont les suivantes:
- les tuyaux simples ("pipes"):
  ces tuyaux sont comparables au boîtes-à-lettres que l'on trouve sur le système VMS (tm) de DEC; il permettent donc la communication d'information via des zones transitoires dans le système d'exploitation; toutefois, ces tuyaux simples sont d'un intérêt limité, car, du fait du mécanisme de leur mise en oeuvre, il est impératif que les deux processus communicant des données aient un ancêtre commun, qui ait ouvert les tuyaux de communication, ce qui, en pratique, est très difficile à mettre en oeuvre;
- les tuyaux nommés ("named pipes" ou "FIFO"):
  ces tuyaux fonctionnent comme les précédents, à ceci près qu'ils se présentent comme des pseudo-fichiers sur disque, dont le nom permet de les répérer et d'y accéder (d'où le qualificatif de "nommés"); ils sont équivalents aux boites-à-lettres de VMS (tm), et peuvent être utilisés de la même manière;
- les messages :
  des processus peuvent communiquer à l'aide des primitives du système de gestion de message; de même que pour VMS (tm), des habilitations adéquates sont nécessaires pour créer et utiliser les queues de messages;
- les sémaphores :
  cette possibilité, qui est légèrement différentes sur le plan du principe à celui des sémaphores communs sous VMS (tm), permet néanmoins à un ensemble de processus de communiquer des informations autorisant l'activation d'un processus à partir d'un autre, ce qui autorise ainsi la réalisation de l'invention précédemment décrite au moyen de cette technique;
- la mémoire partagée :
  d'une façon légèrement différente de celle qui existe sous VMS (tm), il est possible à des processus fonctionnant sous UNIX System V (tm) et compatibles de créer des zones de mémoires partagées et de communiquer à travers ces dernières, à condition que les processus en question possèdent les habilitations nécessaires;
- les fichiers :
  de même que pour VMS (tm), deux processus sous UNIX (tm) peuvent communiquer par le biais de fichiers dans lesquels ils écrivent et lisent les informations à communiquer; de même que précédemment, dans le cas où l'information à communiquer est de type binaire, la seule présence/absence du fichier peut suffire à passer l'information, ce qui est, par exemple, utilisé sur un certain nombre de systèmes de la famille UNIX (tm) pour sérier les accès aux ports d'entrées/sortie;
- les signaux ("signals") :

10

cette méthode, qui n'a pas d'équivalent sous VMS (tm), permet à un processus d'en interrompre un autre pour le forcer à exécuter la routine qu'il aura prévue à cet effet; si le processus interrompu n'a pas prévu de routine pour ce signal, il sera en général terminé, ou le signal sera ignoré; il est ainsi possible à un processus d'en "réveiller" un autre, à condition toutefois qu'il le processus "éveilleur" ait les habilitations requises, c'est-à-dire, qu'il soit la propriété du "super-utilisateur" ou du même utilisateur que le processus à réveiller;

Les techniques décrites ci-dessus permettent, sans difficulté particulière, de réaliser l'invention sur un système de la famille UNIX (tm).

**Revendications**

1. Procédé d'automatisation de certaines interventions humaines de validation de modules dans les systèmes de développement de logiciels, caractérisé en ce que, si le module n'a pas encore été validé dans le logiciel en cours de développement, et/ou si le module a déjà été validé mais passe avec succès des tests de correction, l'on remplace la validation manuelle d'un moule d'un logiciel par le responsable du projet par une validation automatique par un processus utilitaire.

2. Procédé selon la revendication 1, caractérisé en ce qu'il répète indéfiniment les étapes suivantes :
   - attente d'une demande de validation d'un module de la part d'un programmeur, via un utilitaire d'un système de développements de logiciels ;
   - lorsque la demande est reçue, recherche dans toute la zone de développement d'une procédure temporaire contenant les opérations à exécuter pour la validition du module, y compris la vérification de non validation du module de logiciel concerné par la demande de validation ;
   - une fois exécutées les instructions de validation contenues dans la procédure temporaire, destruction de la procédure temporaire ;
   - répétition des étapes de façon permanente, de sorte qu'un programmeur peut à tout moment valider un nouveau module de logiciel en cours de développement.

3. Procédé selon la revendication 2, caractérisé en ce que, si la vérificatin montre que le module a été validé, le processus vérifie le succès de tests de correction appliqués au module.

4. Procédé selon l'une des revendications 2 et 3, caractérisé en ce qu'un processus de validation automatique est mis en attente d'un sémaphore, dont l'état est changé par le développeur désirant faire valider un module, à l'aide d'un utilitaire adéquat, réactivant ainsi le processus de validation, cette dernière n'ayant effectivement lieu qu'à la condition que le module ne figure pas déjà dans le logiciel en cours de développement ou réponde aux tests de correction.

5. Procédé selon la revendication 3, où la machine de développement est une machine d'un type compatible avec la famille des VAX de DEG, et où le sémaphore est un sémaphore commun ("common event flag") au projet de développement d'un logiciel, et où le programmeur ayant réalisé un module peut obtenir la validation automatique de ce module à l'aide d'un utilitaire du système de développement, qui réactive une procédure de validation ayant les habilitations requises, par le canal du sémaphore commun en attente duquel se trouve la procédure de validation.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0323707 (WESTINGHOUSE ELECTRIC CORPORATION) <br> * le document en entier * <br> --- | 1 | G06F9/44 <br> G06F11/00 |
| A | AUTOMATISIERUNGSTECHNISCHE PRAXIS - ATP. <br> vol. 31, no. 1, janvier 1990, MUNCHEN DE <br> pages 30 - 36; <br> "TBM, ein vollständig generierbares <br> Software-Modultestbett" <br> * le document en entier * <br> --- | 1 | |
| A | The Second International Conference on COMPUTERS AND APPLICATIONS <br> juin 1987, BEIJING (PEKING) Rép. Pop. de Chine <br> pages 532 - 535; M. E. Yip: <br> "Automatic large-scale software integration" <br> * le document en entier * <br> --- | 1 | |
| A | IEEE SOFTWARE. <br> vol. 7, no. 1, janvier 1990, LOS ALAMITOS US <br> pages 31 - 36; J. Hartmann et al.: <br> "Techniques for selective revalidation" <br> * le document en entier * <br> --- | 1 | **DOMAINES TECHNIQUES RECHERCHES (Int. Cl.5 )** |
| A | IEEE DESIGN & TEST OF COMPUTERS. <br> vol. 3, no. 5, octobre 1986, NEW YORK, NY, USA <br> pages 39 - 48; E.T Grinthal: <br> "Software quality assurance and CAD user interfaces" <br> * le document en entier * <br> ----- | 1 | G06F |

**Le présent rapport a été établi pour toutes les revendications**

| Lieu de la recherche | Date d'achèvement de la recherche | Examinateur |
|---|---|---|
| BERLIN | 25 OCTOBRE 1990 | DURAND, J |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.....................................................................
& : membre de la même famille, document correspondant

EPO FORM 1503 03.82 (P0402)